# FASCICULE DE BREVET EUROPEEN

(11) **EP 0 724 218 B1**
(45) Date de publication et mention de la délivrance du brevet: **24.03.1999**
(21) Numéro de dépôt: 96400086.3
(22) Date de dépôt: 12.01.1996
(51) Int. Cl.: G06F 11/18

(54) **Dispositif calculateur à tolérance de fautes**
Fehlertolerante Rechnervorrichtung
Fault tolerant computer apparatus

(30) Priorité: 27.01.1995 FR 9501076
(43) Date de publication de la demande: 31.07.1996
(73) Titulaire: SEXTANT AVIONIQUE (Société Anonyme), 78141 Velizy Villacoublay (FR)
(72) Inventeur: Loise, Dominique, F-78140 Velizy Villacoublay (FR)
(74) Mandataire: de Saint-Palais, Arnaud Marie

(56) Documents cités:
- EP-A- 0 227 520
- US-A- 4 667 284
- IEEE TRANSACTIONS ON INDUSTRY APPLICATIONS, vol. 25, no. 3, Mai 1989, NEW YORK US, pages 514-522, XP000039080 MAGGIOLI V J: "THE SAFETY MATRIX-A METHOD FOR GUIDELINING INDUSTRIAL MICROCOMPUTERS"
- ISA TRANSACTIONS, vol. 30, no. 4, 1 Janvier 1991, RESEARCH TRIANGLE PARK US, pages 97-106, XP000275597 FREDERICKSON T ET AL: "COMPARISON OF FAULT TOLERANT CONTROLLERS USED IN SAFETY APPLICATIONS"

## Description

La présente invention concerne une architecture de calculateur tolérante aux pannes.

Elle s'applique notamment, mais non exclusivement, aux calculateurs devant offrir un taux élevé de détection de pannes de fonctionnement, comme par exemple, ceux embarqués à bord des aérodynes.

Par ailleurs, dans le domaine de l'aviation commerciale, on cherche à augmenter le taux de disponibilité des appareils, et donc à limiter les interventions de maintenance en dehors de visites préprogrammées. Cet objectif implique que les pannes survenant dans les équipements électroniques des aérodynes ne doivent altérer ni la sécurité, ni la disponibilité des fonctions qu'ils réalisent, de manière à pouvoir reporter les réparations éventuelles à la visite de maintenance suivante. Pour cela, il faut une architecture capable de détecter les ressources réellement en panne avec un taux de confiance élevé, et capable de se reconfigurer sur une ressource redondante. En outre, pour faciliter la maintenance, une telle architecture doit être capable de faire la discrimination entre une panne et une anomalie de conception, afin d'éviter toute reconfiguration inutile et opération de maintenance injustifiée.

Actuellement, pour atteindre de tels objectifs de fiabilité et de sécurité, on utilise des calculateurs à architecture redondante dans laquelle la chaîne de traitement est dupliquée pour constituer un module qui assure en outre le test de son bon fonctionnement par comparaison des résultats obtenus par les deux chaînes. Lorsqu'une différence est détectée, indiquant la survenance d'une panne, le module se met dans un état inactif. Pour pouvoir poursuivre les traitements effectués par la chaîne et permettre une maintenance différée, on utilise en parallèle un deuxième module analogue au premier.

Cette solution implique donc une architecture à quatre chaînes redondantes, ce qui entraîne des coûts particulièrement élevés.

Pour atteindre ces objectifs à moindre coût, on a proposé une architecture à trois chaînes de traitement redondantes couplées à un dispositif voteur qui compare les résultats obtenus par les trois chaînes. Lorsqu'une différence est détectée, la chaîne qui a fourni un résultat différent de celui fourni par les deux autres chaînes est déclarée en panne et rendue inactive, les traitements étant poursuivis par les deux autres chaînes qui émettent une information signalant la panne. Un tel dispositif est, par exemple, divulgué dans le document US-A-4 667 284.

Or, une chaîne de traitement peut être décomposée en trois fonctions, à savoir :
- une fonction d'acquisition de données qui reçoit toutes les données à traiter de types analogique ou numérique, qui convertit les signaux analogiques en données numériques, et qui dispose d'une fonction de sélection de la donnée à délivrer en sortie,
- une fonction de traitement proprement dite, généralement réalisée à l'aide d'un processeur, qui agit sur la fonction d'acquisition pour sélectionner la donnée à lui fournir, et
- une fonction d'émission des résultats fournis par la fonction de traitement.

Ces solutions conduisent donc à utiliser trois chaînes complètes redondantes. De ce fait, elle demeurent couteuses.

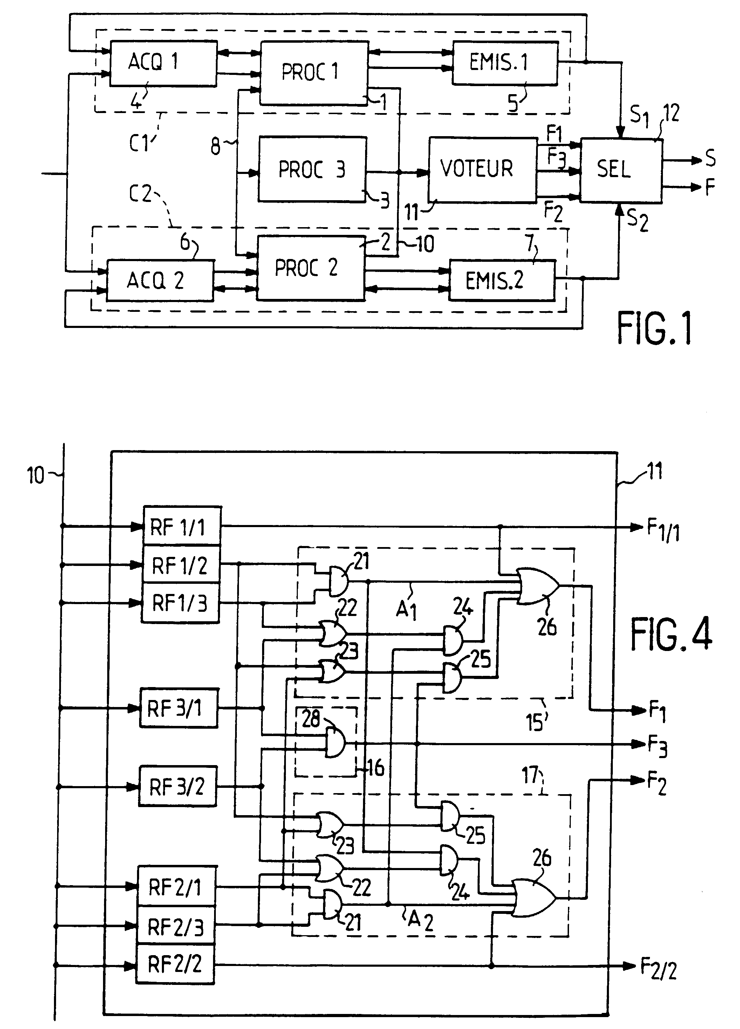

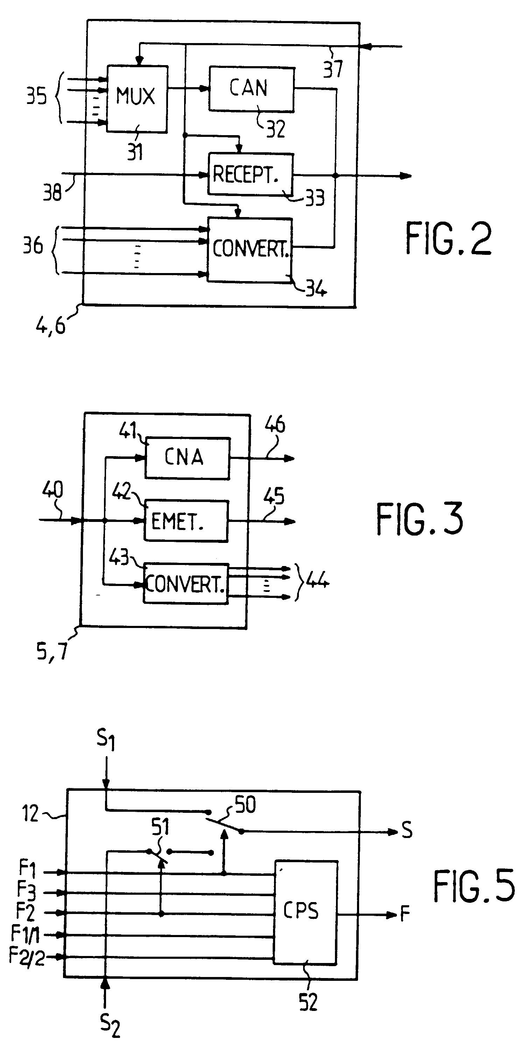

La présente invention a pour but de supprimer ces inconvénients. A cet effet elle propose un calculateur conçu pour assurer au moins une fonction déterminée, capable de détecter les pannes et d'assurer ladite fonction après détection d'une panne, comprenant deux chaînes de traitement redondantes assurant chacune ladite fonction, et un dispositif de surveillance comportant un processeur de traitement assurant la surveillance du fonctionnement des deux chaînes de traitement. Un tel calculateur est, par exemple connu des Figures 1 et 2 du document ISA Transactions, Vol. 30, Nº 4, 1 Janvier 1991, Research Triangle Park, US, pages 97-106, FREDERICKSON T. et al. . Selon l'invention, ce calculateur est caractérisé en ce que chaque chaîne de traitement comprend un circuit d'acquisition, un circuit d'émission et un processeur de traitement assurant la surveillance du fonctionnement de l'autre chaîne et du dispositif de surveillance, chaque chaîne de traitement et le dispositif de surveillance délivrant des informations relatives respectivement à l'état de fonctionnement des chaînes de traitement et du dispositif de surveillance surveillés, le calculateur comprenant en outre un dispositif voteur connecté aux deux chaînes et au dispositif de surveillance pour recevoir lesdites informations afin de déterminer si l'une des deux chaînes ou le dispositif de surveillance est en panne, et un dispositif de sélection pour n'émettre que les résultats fournis par les deux chaînes considérées en bon fonctionnement.

L'architecture de ce calculateur permet d'atteindre l'objectif de tolérance aux pannes simplement en mettant en oeuvre deux chaînes redondantes.
En effet, si une défaillance est détectée sur une des chaînes de traitement ou le dispositif de surveillance, la fonction de traitement peut être poursuivie par l'autre chaîne, ainsi que la fonction de surveillance. Par rapport à un dispositif à trois chaînes redondantes, on économise ainsi un circuit d'acquisition et un circuit d'émission des résultats.

Par ailleurs, le calculateur selon l'invention ne comporte qu'une seule sortie au lieu de deux ou trois comme dans les architectures à trois ou quatre chaînes redondantes, ce qui simplifie la connexion du calculateur aux autres équipements de l'aérodyne.

Selon une particularité de l'invention, les fonctions de traitement de chacune des deux chaînes redondantes comprennent des moyens pour surveiller le fonctionnement des circuits d'acquisition et d'émission, le résultat de ces surveillances étant appliqué à l'entrée du dispositif voteur pour déterminer si ladite chaîne doit être déclarée en panne ou non.

Cette disposition, permet de surveiller également le bon fonctionnement des circuits d'acquisition et d'émission, et d'affiner la localisation des pannes.

Selon une autre particularité de l'invention, les données en sortie du circuit d'émission de chacune des deux chaînes sont appliquées à l'entrée du circuit d'acquisition, afin de vérifier le bon fonctionnement des circuits d'émission et de réception.

Un mode de réalisation du calculateur selon l'invention sera décrit ci-après, à titre d'exemple non limitatif, avec référence aux dessins annexés dans lesquels :
La figure 1 représente schématiquement l'architecture du calculateur selon l'invention ;
Les figures 2 et 3 montrent respectivement un circuit d'acquisition et un circuit d'émission ;
La figure 4 montre en détail le dispositif voteur ; et
La figure 5 représente schématiquement le dispositif de sélection dudit calculateur.

Sur la figure 1, le calculateur selon l'invention comprend deux chaînes de traitement C1,C2 redondantes, un dispositif de surveillance 3, un dispositif voteur 11 et un circuit de sélection 12.

Chacune des deux chaînes de traitement C1,C2 comprend :
- un processeur de traitement 1,2, assurant le traitement proprement dit des données,
- un circuit d'acquisition 4,6, assurant la réception des données en entrée de la chaîne de traitement, la conversion de ces données suivant un format susceptible d'être traité par le processeur de traitement 1,2, ce circuit permettant au processeur 1,2 de sélectionner les données à traiter à un instant donné, et
- un circuit d'émission 5,7, chargé d'émettre les résultats obtenus par le processeur et de les convertir suivant un format compatibles avec les équipements auxquels ils sont destinés.

Le dispositif de surveillance comprend un processeur 3, les trois processeurs du calculateur étant interconnectés, par exemple par une ligne série 8 bidirectionnelle, de manière à ce que chacun puisse à la fois, déclencher des tests en tâche de fond sur les deux autres processeurs, recevoir les résultats de ces tests, et comparer les résultats ainsi obtenus avec les valeurs attendues. Chaque processeur 1,2,3 émet ensuite sur une ligne 10 le résultat de ces comparaisons sous la forme de booléens indiquant l'état de fonctionnement bon ou mauvais des deux autres processeurs. Ces booléens sont reçus par le dispositif voteur 11 qui effectue une consolidation à partir de leurs valeurs respectives, pour déterminer l'état effectif de fonctionnement F₁,F₂,F₃, des deux chaînes de traitement C1,C2 et du dispositif de surveillance 3.

Ces états F₁,F₂,F₃ sont ensuite appliqués à l'entrée du circuit de sélection 12 qui délivre en sortie S du calculateur, en fonction des états respectifs F₁ et F₂ des deux chaînes de traitement C1,C2, soit les résultats S₁ émis par le circuit d'émission 5 de la première chaîne de traitement C1, soit ceux S₂ émis par le circuit d'émission 7 de la seconde chaîne de traitement C2.
Ce circuit de sélection 12, comporte avantageusement une autre sortie F délivrant des signaux indiquant les pannes détectées à des fins de maintenance.

Afin de rendre plus exhaustive la détection de panne, la sortie du circuit d'émission 5,7 de chaque chaîne est rebouclée sur l'entrée du circuit d'acquisition 4,6 respectif. De cette manière, les processeurs 1,2 de chaque chaîne C1,C2 peuvent déterminer le bon fonctionnement des circuits correspondants. Ils peuvent également déclencher des séquences d'autotests.

Le résultat de ces tests est émis sous la forme d'un booléen F_{1/1}, F_{2/2} par le processeur 1,2 sur la ligne 10 à destination du dispositif voteur 11.

Selon un mode d'exécution avantageux de l'invention, ces booléens F_{1/1}, F_{2/2} sont émis par le circuit de sélection 12 sur la sortie F pour faciliter la localisation de la panne lors de la réparation du calculateur, cette indication permettant d'indiquer si la panne provient du processeur 1,2 ou des circuits d'émission 5,7 ou d'acquisition 4,6.

Un tel calculateur autorise une maintenance différée tant que la ou les fonctions réalisée(s) par le calculateur sont encore disponible(s), c'est-à-dire, tant qu'au moins les deux chaînes C1,C2, ou bien une chaîne et le dispositif de surveillance 3 sont en bon fonctionnement. Dans cette configuration, le calculateur se trouve dans un mode de fonctionnement dégradé lui permettant d'assurer la détection des pannes. En effet, si dans ce mode, une erreur dans les résultats des tests est détectée par l'un des processeurs encore en bon fonctionnement, le dispositif voteur 11 ne dispose pas d'informations suffisantes pour déterminer quel est le processeur effectivement en bon fonctionnement. Pour tenir compte de cet état, le circuit de sélection 12 comprend des moyens pour isoler la sortie S du calculateur lorsqu'au moins une panne est détectée en mode dégradé.

Sur la figure 2, chaque circuit d'acquisition 4,6 comprend un multiplexeur 31 aux entrées duquel sont appliqués des signaux analogiques 35. Le signal analogique sélectionné par le multiplexeur 31 est appliqué à l'entrée d'un convertisseur analogique / numérique 32 avant d'être envoyé vers le processeur 1 ou 2.
Ce circuit 4,6 comprend des entrées 36 sur lesquelles sont appliqués des signaux logiques. Ces signaux sont traités par un circuit de conversion, conçu pour les rassembler et les mettre sous forme de données numériques, avant de les envoyer vers le processeur 1 ou 2.
Il peut comprendre également un circuit de réception 33 de messages transmis par liaison parallèle ou série 38, par exemple de type ARINC 429.
Il comprend en outre une ligne 37 connectée au processeur 1 ou 2 permettant à ce dernier de sélectionner à tout instant la source de données qu'il souhaite recevoir.

Sur la figure 3, chaque circuit d'émission 5,7 comprend, en parallèle sur une entrée 40 connectée à une sortie du processeur correspondant 1,2 :
- un convertisseur numérique / analogique 41 délivrant un signal analogique sur une ligne 46 à partir de données numériques appliquées en entrée,
- un émetteur 42 de messages sur une ligne 45 parallèle ou série, par exemple de type ARINC 429, et
- un convertisseur 43 fournissant des signaux logiques sur un ensemble de sorties 44 à partir de données numériques appliquées en entrée.

Le processeur 1 ou 2 associe à chaque donnée qu'il envoie au circuit d'émission 5,7, un signal permettant de sélectionner la forme selon laquelle la donnée doit être émise, c'est-à-dire, lequel des convertisseurs 41, 43 ou de l'émetteur 42 doit traiter la donnée associée.

Les sorties des circuits d'émission 5,7 sont raccordées à certaines entrées correspondantes du circuit d'acquisition 4,6 respectif, de manière à permettre au processeur 1,2 de la chaîne C1,C2 de contrôler leur bon fonctionnement.

Sur la figure 4, le dispositif voteur 11 comprend trois circuits logiques 15,16,17 destinés à déterminer l'état de fonctionnement des deux chaînes de traitement C1,C2 et du dispositif de surveillance 3, à partir des états de ces derniers, déterminés par chacun de ceux-ci.
A cet effet, ce dispositif comprend huit registres permettant de mémoriser les états de fonctionnement déterminés par les deux chaînes de traitement C1,C2 et du dispositif de surveillance 3, à savoir :
- RF1/1 qui mémorise l'état de fonctionnement bon ou mauvais de la première chaîne C1 déterminé par le processeur 1 de la première chaîne C1,
- RF1/2 qui mémorise l'état de la première chaîne C1 vu par le processeur 2 de la seconde chaîne C2,
- RF1/3 qui mémorise l'état de la première chaîne C1 vu par le dispositif de surveillance 3,
- RF3/1 qui mémorise l'état du dispositif de surveillance 3 vu par le processeur 1,
- RF3/2 qui mémorise l'état du dispositif de surveillance 3 vu par le processeur 2,
- RF2/1 qui mémorise l'état de la seconde chaîne C2 vu par le processeur 1,
- RF2/2 qui mémorise l'état de la seconde chaîne déterminé par le processeur 2,
- RF2/3 qui mémorise l'état de la seconde chaîne vu par le dispositif de surveillance 3,

Les contenus respectifs des registres RF1/1, RF1/2 et RF1/3 donnant l'état de fonctionnement de la première chaîne C1 vu par les trois processeurs 1,2,3, servent à déterminer par vote l'état de fonctionnement effectif F₁ de cette chaîne. A cet effet, ils sont appliqués aux entrées du circuit logique 15 avec l'état de fonctionnement effectif F₃ du dispositif de surveillance 3. Ce circuit logique 15 comprend :
- une première porte ET 21 sur laquelle sont appliqués en entrée le contenu des registres RF1/2 et RF1/3.
- une première et une seconde porte OU 22,23 sur lesquelles sont appliqués respectivement le contenu des registres RF1/3 et RF3/1, et le contenu des registres RF1/2 et RF2/1,
- une seconde et une troisième porte ET 24,25 dont une entrée est reliée respectivement aux sorties des portes OU 22,23, et
- une troisième porte OU 26 délivrant le signal F₁ et comportant quatre entrées reliées respectivement au registre RF1/1, et aux sorties des trois portes ET 21,24,25.

Ce circuit logique 15 fournit un signal A₁ issu de la première porte ET 21 au circuit logique 17 servant à la détermination de l'état de la seconde chaîne C2, et reçoit de ce dernier un signal A₂ qui est appliqué à l'entrée de la seconde porte ET 24. Par ailleurs, le signal F₃ en sortie du circuit logique 16 servant à déterminer l'état de fonctionnement effectif du dispositif de surveillance 3, est appliqué à l'entrée de la troisième porte ET 25.

Ainsi, grâce au circuit logique 15, la chaîne C1 est déclarée en panne si :
- ses circuits d'émission ou d'acquisition sont diagnostiqués en panne par le processeur 1 (RF1/1 = 1), ou
- le processeur 1 est diagnostiqué en panne à la fois par les deux autres processeurs, ou
- la seconde chaîne C2 étant déjà déclarée en panne, le processeur 1 est diagnostiqué en panne par le processeur 3, ou inversement, le processeur 3 est diagnostiqué en panne par le processeur 1, ou
- le dispositif de surveillance 3 étant déjà déclaré en panne, le processeur 1 est diagnostiqué en panne par le processeur 2, ou inversement, le processeur 2 est diagnostiqué en panne par le processeur 1.

Les deux derniers cas correspondent à la passivation de la chaîne restante dès que l'un des deux processeurs restants après la première panne déclarée, diagnostique l'autre processeur en panne. Par ailleurs, on peut remarquer que si la chaîne C1 est déclarée en panne à cause d'une défaillance de son circuit d'acquisition ou d'émission, elle peut continuer à diagnostiquer des pannes sur l'autre chaîne C2 et le dispositif de surveillance 3.

Inversement, si les registres RF1/1, et au moins un des registres RF1/2 et RF1/3 ne contiennent pas la valeur 1, la seconde chaîne C2 et le dispositif de surveillance 3 étant en bon fonctionnement (A₂ = 0 et F₃ = 0), alors la première chaîne C1 est déclarée en bon fonctionnement (F₁ = 0) par le dispositif voteur 11.

D'une manière analogue, les contenus respectifs des registres RF3/1 et RF3/2 donnant l'état de fonctionnement du dispositif de surveillance 3 vu par les processeurs 1,2 des deux chaînes C1,C2, servent à déterminer par vote l'état de fonctionnement effectif F₃ du dispositif de surveillance. Pour cela ils sont appliqués à l'entrée d'une porte ET 28 du circuit logique 16, délivrant en sortie l'état effectif F₃ du dispositif de surveillance 3 qui est fourni en sortie du dispositif voteur 11.
De cette manière, si le dispositif de surveillance 3 est déclaré en panne à la fois par les processeurs 1,2 respectifs des deux chaînes C1,C2 en bon fonctionnement, alors le dispositif de surveillance 3 est déclaré en panne (F₃ = 1) par le dispositif voteur 11.

L'état effectif F₂ de fonctionnement de la seconde chaîne C2 est élaboré de la même manière que celui de la première chaîne C1, à l'aide d'un circuit logique 17 identique au circuit 15, aux entrées duquel sont appliqués les signaux A₁ et F₃ de la première chaîne C1 et du dispositif de surveillance 3, et la sortie des registres RF2/1, RF2/2 et RF2/3.

Si l'une des deux chaînes C1,C2 ou le dispositif de surveillance 3 est déclaré en panne, le calculateur fonctionne alors suivant un mode dégradé, dans lequel les deux chaînes C1,C2 ou le dispositif de surveillance 3 encore en bon fonctionnement se surveillent mutuellement. Le calculateur conserve donc une architecture redondante. Ainsi, par exemple, si la seconde chaîne C2 est déclarée en panne par la première chaîne C1 et par le dispositif de surveillance (A₂ = 1 et F₂ = 1), il suffit que le contenu du registre RF1/3 passe à 1, indiquant que le dispositif de surveillance 3 a détecté une défaillance au niveau de la première chaîne C1, pour que le circuit logique 15 fournisse un signal F₁ à l'état logique 1.

Par contre, si seul le contenu du registre RF1/1 passe à 1, seule la première chaîne C1 peut être déclarée en panne (F₁ = 1). De cette manière, si la deuxième chaîne C2 était en bon fonctionnement et le dispositif de surveillance 3 en panne, le calculateur pourrait continuer à fonctionner avec la seule seconde chaîne C2, sous le surveillance du processeur 1.

Il convient de remarquer que le dispositif voteur 11 présente un fonctionnement réversible, si bien qu'une chaîne C1,C2, ou le dispositif de surveillance 3 peut être déclaré en bon fonctionnement (Fᵢ = 0) après avoir été déclaré en panne (Fᵢ = 1). Cette caractéristique est particulièrement avantageuse notamment pour les équipements électroniques embarqués à bord des aérodynes, dont le fonctionnement peut être temporairement perturbé par exemple, par des rayonnements électromagnétiques.

Sur la figure 5, le circuit de sélection 12 comprend un commutateur 50 permettant de sélectionner parmi les sorties S₁ et S₂ des deux chaînes de traitement C1,C2, celle qui est envoyée en sortie S du calculateur. Ce commutateur 50 est commandé en fonction de l'état de fonctionnement F₁ bon ou mauvais de la première chaîne C1 qui est sélectionnée par défaut. Si F₁ est égal à 1, le commutateur 50 bascule pour sélectionner et envoyer la sortie S₂ de la seconde chaîne C2 vers la sortie S du calculateur.

Ce circuit de sélection 12 comprend en outre un interrupteur 51 raccordé d'un côté à la sortie S₂ de la seconde chaîne C2, et de l'autre au commutateur 50. Il permet de ne pas appliquer la sortie S₂ en sortie S du calculateur si la seconde chaîne C2 est déclarée en panne (F₂ = 1).

Selon un mode d'exécution avantageux de l'invention, ce circuit de sélection 12 comprend un convertisseur parallèle / série 52 pour rassembler sous la forme d'un mot binaire, les états respectifs F₁,F₂,F₃ des deux chaînes de traitement C1,C2 et du dispositif de surveillance 3, et les états respectifs F_{1/1} et F_{2/2} des circuits d'acquisition 4,6 et d'émission 5,7.
Grâce à une telle disposition, le calculateur est donc capable de fournir des indications relativement précises permettant de faciliter la localisation d'une panne éventuelle.

## Revendications

1. Calculateur conçu pour assurer au moins une fonction déterminée, pour détecter les pannes et assurer ladite fonction après détection d'une panne,
comprenant deux chaînes de traitement (C1,C2) redondantes assurant chacune ladite fonction, et un dispositif de surveillance (3) comportant un processeur de traitement assurant la surveillance du fonctionnement des deux chaînes de traitement (C1,C2), caractérisé en ce que chaque chaîne de traitement comprend un circuit d'acquisition (4,6), un circuit d'émission (5,7) et un processeur de traitement (1,2) assurant la surveillance du fonctionnement de l'autre chaîne et du dispositif de surveillance, chaque chaîne de traitement (C1,C2) et le dispositif de surveillance (3) délivrant des informations (F_{i/j}, i et j variant de 1 à 3) relatives respectivement à l'état de fonctionnement des chaînes de traitement (C1,C2) et du dispositif de surveillance (3) surveillés, le calculateur comprenant en outre un dispositif voteur (11) connecté aux deux chaînes (C1,C2) et au dispositif de surveillance (3) pour recevoir lesdites informations (F_{i/j}) afin de déterminer si l'une des deux chaînes (C1,C2) ou le dispositif de surveillance (3) est en panne, et un dispositif de sélection (12) pour n'émettre que les résultats (S₁,S₂) fournis par les deux chaînes considérées en bon fonctionnement.

2. Calculateur selon la revendication 1,
caractérisé en ce qu'il comprend une seule sortie (S) vers laquelle sont émis les résultats (S₁,S₂) fournis par l'une des deux chaînes (C1,C2) considérée en bon fonctionnement et sélectionnés par le dispositif de sélection (12).

3. Calculateur selon la revendication 1 ou 2,
caractérisé en ce que le processeur (1,2) de chaque chaîne de traitement (C1,C2) comprend des moyens pour surveiller le fonctionnement des circuits d'acquisition (4,6) et d'émission (5,7), et des moyens pour élaborer une information (F_{1/1},F_{2/2}) relative à l'état de ces circuits, cette information étant envoyée au dispositif voteur (11).

4. Calculateur selon l'une des revendications précédentes,
caractérisé en ce que le circuit d'émission (5,7) comprend des sorties (44,45,46) qui sont rebouclées sur les entrées (35,36,38) du circuit d'acquisition (4,6) pour permettre au processeur de traitement (1,2) de vérifier le bon fonctionnement de ces circuits.

5. Calculateur selon l'une des revendications précédentes,
caractérisé en ce que le dispositif voteur (11) comprend au moins un circuit logique (15,16,17) pour consolider lesdites informations (F_{i/j}) fournies par les deux chaînes de traitement (C1,C2) et le dispositif de surveillance (3), et déterminer les états effectifs de fonctionnement (F₁,F₂,F₃) respectifs des deux chaînes (C1,C2) et du dispositif de surveillance (3).

6. Calculateur selon la revendication 5,
caractérisé en ce que ledit circuit logique (15,17) comprend des moyens (26) pour déclarer en panne les circuits d'acquisition (4,6) et d'émission (5,7) d'une chaîne (C1,C2) qui seraient détectés en panne par le processeur de traitement (1,2) de ladite chaîne.

7. Calculateur selon la revendication 5 ou 6,
caractérisé en ce que ledit circuit logique (15,17) comprend des moyens (26) pour prendre en compte les états de fonctionnement (F_{1/j}) des processeurs (1,2,3) d'une chaîne (C1,C2) et du dispositif de surveillance (3) élaborés par le processeur de l'autre chaîne même si les circuits d'acquisition (4,6) et d'émission (5,7) de celle-ci ont préalablement été déclarés en panne (F_{i/i} = 1).

8. Calculateur selon l'une des revendications 5 à 7,
caractérisé en ce que ledit circuit logique (15,17) comprend des moyens (21,26) pour déclarer en panne une chaîne (C1,C2) qui serait détectée en panne à la fois par l'autre chaîne et le dispositif de surveillance (3), et pour déclarer en bon fonctionnement une chaîne (C1,C2) qui serait détectée en bon fonctionnement à la fois par le processeur de traitement (1,2)) de celle-ci et, soit par l'autre chaîne, soit par le dispositif de surveillance (3).

9. Calculateur selon l'une des revendications 5 à 8,
caractérisé en ce que ledit circuit logique (17) comprend des moyens (28) pour déclarer en panne le dispositif de surveillance (3) si les deux chaînes de traitement (C1,C2) ont détectés celui-ci en panne, et pour déclarer en bon fonctionnement le dispositif de surveillance (3) si l'une ou l'autre des deux chaînes (C1,C2) l'a détecté en bon fonctionnement.

10. Calculateur selon l'une des revendications précédentes,
caractérisé en ce que le dispositif de sélection (12) comprend des moyens (52) pour émettre en sortie les états effectifs de fonctionnement (F₁,F₂,F₃) des deux chaînes de traitement (C1,C2) et du dispositif de surveillance (3) dans le but de faciliter la maintenance du calculateur.

11. Calculateur selon l'une des revendications précédentes,
caractérisé en ce que le dispositif de sélection (12) comprend des moyens (52) pour émettre en sortie les états de fonctionnement (F_{1/1},F_{2/2}) des deux chaînes de traitement détectés respectivement par celles-ci, dans le but de fournir une indication sur l'état de fonctionnement des circuits d'émission (4,6) et d'acquisition (5,7) de chaque chaîne (C1,C2).

## Patentansprüche

1. Rechner, der konzipiert ist, um mindestens eine bestimmte Funktion auszuführen, um Pannen festzustellen und die genannte Funktion nach Feststellung einer Panne auszuführen, mit zwei redundanten Verarbeitungsketten (C1, C2), die jeweils die genannte Funktion ausführen, und einer Überwachungsvorrichtung (3), die einen Verarbeitungsprozessor beinhaltet, der die Überwachung der Funktion der beiden Verarbeitungsketten (C1, C2) gewährleistet,
dadurch gekennzeichnet, daß jede Verarbeitungskette einen Datenerfassungsschaltkreis (4, 6), einen Sendeschaltkreis (5, 7) und einen Verarbeitungsprozessor (1, 2) beinhaltet, der die Überwachung der Funktion der anderen Kette gewährleistet, wobei jede Verarbeitungskette (C1, C2) und die Überwachungsvorrichtung (3) Informationen liefern (F_{i,j}, wobei i und j von 1 bis 3 variieren), die jeweils den Funktionszustand der überwachten Verarbeitungsketten (C1, C2) und der Überwachungsvorrichtung (3) betreffen, wobei der Rechner darüber hinaus eine Wahlvorrichtung (11) beinhaltet, die an die beiden Ketten (C1, C2) und an die Überwachungsvorrichtung (3) angeschlossen ist, um die genannten Informationen (Fi/j) entgegenzunehmen und zu entscheiden, ob eine der beiden Ketten (C1, C2) oder die Überwachungsvorrichtung (3) ausgefallen ist, und eine Auswahlvorrichtung (12), um nur die Ergebnisse (S1, S2) zu übermitteln, die von den beiden Ketten geliefert werden, die als funktionsfähig angesehen worden sind.

2. Rechner gemäß Patentanspruch 1,
dadurch gekennzeichnet, daß er nur einen einzigen Ausgang (S) beinhaltet, an den die Ergebnisse (S1, S2) weitergegeben werden, die von einer der beiden Ketten (C1, C2) geliefert worden sind, die als funktionsfähig angesehen und von der Auswahlvorrichtung (12) ausgewählt worden ist.

3. Rechner gemäß Patentanspruch 1 oder 2,
dadurch gekennzeichnet, daß der Prozessor (1, 2) jeder Verarbeitungskette (C1, C2) Mittel für die Überwachung der Funktion der Datenerfassungsschaltkreise (4, 6) und Sendeschaltkreise (5, 7) und Mittel für die Erstellung einer Information (F1/1, F2/2) über den Zustand dieser Schaltkreise beinhaltet, welche Information an die Wahlvorrichtung (11) weitergegeben wird.

4. Rechner gemäß eines der vorausgehenden Patentansprüche,
dadurch gekennzeichnet, daß der Sendeschaltkreis (5, 7) Ausgänge (44, 45, 46) beinhaltet, die als Schleife an die Eingänge (33, 36, 38) des Datenerfassungsschaltkreises (4, 6) angeschlossen sind, um dem Verarbeitungsprozessor (1, 2) die Möglichkeit zu geben, die störungsfreie Funktion dieser Schaltkreise zu überprüfen.

5. Rechner gemäß eines der vorausgehenden Patentansprüche,
dadurch gekennzeichnet, daß die Wahlvorrichtung (11) mindestens einen Logikschaltkreis (15, 16, 17) beinhaltet, um die genannten Informationen (Fi/j) zu konsolidieren, die von den beiden Verarbeitungsschaltkreisen (C1, C2) und der Überwachungsvorrichtung (3) geliefert worden sind und um die tatsächlichen jeweiligen Funktionszustände (F1, F2, F3) der beiden Ketten (C1, C2) und der Überwachungsvorrichtung festzustellen.

6. Rechner gemäß Patentanspruch 5,
dadurch gekennzeichnet, daß der genannte Logikschaltkreis (15, 17) Mittel (26) beinhaltet, um die Datenerfassungsschaltkreise (4, 6) und Sendeschaltkreise (5, 7) einer Kette (C1, C2) für funktionsgestört zu erklären, die vom Verarbeitungsprozessor (1, 2) der genannten Kette für gestört erkannt worden sind.

7. Rechner gemäß Patentanspruch 5 oder 6,
dadurch gekennzeichnet, daß der genannte Logikschaltkreis (15, 17) Mittel (26) beinhaltet, um die Funktionszustände (Fi/j) der Prozessoren (1, 2, 3) einer Kette (C1, C2) und der Überwachungsvorrichtung zu berücksichtigen, die vom Prozessor der anderen Kette festgestellt worden sind, selbst wenn die Datenerfassungsschaltkreise (4, 6) und Sendeschaltkreise (5, 7) dieser Kette vorab als funktionsgestört (Fi/j = 1) erklärt worden sind.

8. Rechner gemäß einem der Patentansprüche 5 bis 7,
dadurch gekennzeichnet, daß der genannte Logikschaltkreis (15, 17) Mittel (21, 26) beinhaltet, um eine Kette (C1, C2) für funktionsgestört zu erklären, die gleichzeitig von der anderen Kette und von der Überwachungsvorrichtung (3) als funktionsgestört festgestellt worden ist und um eine Kette (C1, C2) für funktionstüchtig zu erklären, die gleichzeitig vom Verarbeitungsprozessor (1, 2) dieser Kette, oder von der anderen Kette, oder von der Überwachungsvorrichtung (3) als funktionstüchtig erkannt worden ist.

9. Rechner gemäß einem der Patentansprüche 5 bis 8,
dadurch gekennzeichnet, daß der genannte Logikschaltkreis (17) Mittel (28) beinhaltet, um die Überwachungsvorrichtung (3) für funktionsgestört zu erklären, wenn die beiden Verarbeitungsketten (C1, C2) diese als funktionsgestört erkannt haben, und um die Überwachungsvorrichtung für funktionstüchtig zu erklären, wenn die eine oder die andere der beiden Ketten (C1, C2) sie als funktionstüchtig erkannt haben.

10. Rechner gemäß einem der vorausgehenden Patentansprüche,
dadurch gekennzeichnet, daß die Auswahlvorrichtung (12) Mittel (52) beinhaltet, um am Ausgang die effektiven Funktionszustände (F1, F2, F3) der beiden Verarbeitungsketten (C1, C2) und der Überwachungsvorrichtung (3) auszugeben, um die Wartung des Rechners zu erleichtern.

11. Rechner gemäß einem der vorausgehenden Patentansprüche,
dadurch gekennzeichnet, daß die Auswahlvorrichtung (12) Mittel (52) beinhaltet, um am Ausgang die jeweils von ihr festgestellten Funktionszustände (F1, F2, F3) der beiden Verarbeitungsschaltkreise auszugeben, um einen Hinweis in bezug auf den Funktionszustand der Sendeschaltkreise (4, 6) und Datenerfassungsschaltkreise (5, 7) jeder Kette (C1, C2) zu geben.

## Claims

1. A computer designed to perform at least one given function, to detect failures and to perform said function subsequent to the detection of a failure, comprising two redundant processing sequences (C1, C2) each performing said function, and a monitoring device (3) comprising a processing processor monitoring the operating of said two processing sequences (C1, C2), characterized in that each processing sequence comprises an acquisition circuit (4, 6), a transmission circuit (5, 7) and a processing processor (1, 2) monitoring the operating of said other sequence and of said monitoring device, each processing sequence (C1, C2) and said monitoring device (3) supplying data (F_{i/j} i and j varying from 1 to 3) respectively relating to the operating status of the processing sequences (C1, C2) and monitoring device monitored (3), the computer further comprising a voting device (11) connected to said two sequences (C1, C2) and to said monitoring device (3) so as to receive said data (F_{i/j}) in order to determine whether one of said two sequences (C1, C2) or said monitoring device (3) has broken down, and a selection device (12) intended to only output the results (S₁, S₂) provided by the two sequences deemed to be operating properly.

2. The computer as claimed in claim 1, characterized in that it comprises a single output (S) to which are transmitted said results (S₁, S₂) provided by the one of said two processing sequences (C1, C2) deemed to be working properly and selected by said selection device (12).

3. The computer as claimed in claim 1 or 2, characterized in that the processor (1, 2) of each processing sequence (C1, C2) comprises a means for monitoring the operating of said acquisition (4, 6) and transmission (5, 7) circuits, and a means for working out information (F_{1/1}, F_{2/2}) relating to the status of these circuits, this information being transmitted to said voting device (11).

4. The computer as claimed in one of the preceding claims, characterized in that said transmission circuit (5, 7) comprises outputs (44, 45, 46) that are looped back to the inputs (35, 36, 38) of said acquisition circuit (4, 6) to enable the processing processor (1, 2) to check that these circuits are operating properly.

5. The computer as claimed in one of the preceding claims, characterized in that the voting device (11) comprises at least one logic circuit (15, 16, 17) to consolidate said data (F_{i/j}) provided by said two processing sequences (C1, C2) and said monitoring device (3), and to determine the respective actual operating statuses (F₁, F₂, F₃) of said two sequences (C1, C2) and said monitoring device (3).

6. The computer as claimed in claim 5, characterized in that said logic circuit (15, 17) comprises a means (26) for declaring out of order the acquisition (4, 6) and transmission (5, 7) circuits of a sequence (C1, C2) should they be detected out of order by the processing processor (1, 2) of said sequence.

7. The computer as claimed in claim 5 or 6, characterized in that said logic circuit (15, 17) comprises a means (26) for taking into account the operating statuses (F_{i/j}) of the processors (1, 2, 3) of a sequence (C1, C2) and of the monitoring device (3) worked out by the processor of said other sequence even if the latter's acquisition (4, 6) and transmission (5, 7) circuits were declared out of order beforehand (F_{i/i} = 1).

8. The computer as claimed in one of claims 5 to 7, characterized in that said logic circuit (15, 17) comprises a means (21, 26) for declaring out of order a sequence (C1, C2) detected out of order both by the other sequence and by said monitoring device (3), and for declaring in proper working order a sequence (C1, C2) detected in proper working order both by its own processing processor (1, 2) and by either the other sequence or the monitoring device (3).

9. The computer as claimed in one of claims 5 to 8, characterized in that said logic circuit (17) comprises a means (28) for declaring the monitoring device (3) out of order if the two processing sequences (C1, C2) have detected it out of order, and for declaring the monitoring device (3) to be in proper working order if one or other of these two sequences (C1, C2) has detected it to be in proper working order.

10. The computer as claimed in one of the preceding claims, characterized in that the selecting circuit (12) comprises a means (52) for transmitting at output the actual operating statuses (F₁, F₂, F₃) of said two processing sequences (C1, C2) and of said monitoring device (3) with a view to facilitating the maintenance of the computer.

11. The computer as claimed in one of the preceding claims, characterized in that said selecting circuit (12) comprises a means (52) for transmitting at output the operating statuses (F_{1/1}, F_{2/2}) of said two processing sequences detected respectively by the latter, with a view to providing an indication relating to the operating status of the transmission (5, 7) and acquisition circuits (4, 6) of each sequence (C1, C2).
